# EUROPÄISCHE PATENTSCHRIFT

(11) **EP 2 024 164 B1**
(45) Veröffentlichungstag und Bekanntmachung des Hinweises auf die Patenterteilung: **14.07.2010**
(21) Anmeldenummer: 07725195.7
(22) Anmeldetag: 08.05.2007
(51) Int. Cl.: B29C 51/08, B29C 51/32, B29C 70/46

(54) **VERFAHREN UND VORRICHTUNG ZUM HERSTELLEN EINES KASCHIERTEN FORMTEILS**
METHOD AND APPARATUS FOR THE PRODUCTION OF A LAMINATED MOLDED PART
PROCÉDÉ ET DISPOSITIF DE FABRICATION D'UNE PIÈCE MOULÉE CONTRECOLLÉE

(30) Priorität: 08.05.2006 DE 102006022040
(43) Veröffentlichungstag der Anmeldung: 18.02.2009
(73) Patentinhaber: Faurecia Innenraum Systeme GmbH, 76767 Hagenbach (DE)
(72) Erfinder: SCHELLHASE, Jürgen, 37269 Eschwege-Niederhohne (DE); GASSAN, Jochen, 76829 Landau (DE); NICKEL, Carsten, 36240 Kaufungen (DE)
(74) Vertreter: Pfenning, Meinig & Partner GbR
(86) Internationale Anmeldenummer: PCT/EP2007/004276
(87) Internationale Veröffentlichungsnummer: WO 2007/128589

(56) Entgegenhaltungen:
- EP-A- 0 348 357
- EP-A2- 0 384 270
- EP-A2- 0 686 476
- DE-A1- 4 008 221

## Beschreibung

Die vorliegende Erfindung betrifft ein Verfahren zum Herstellen eines kaschierten Formteils sowie ein Formwerkzeug zum Herstellen des Formteils nach dem erfindungsgemäßen Verfahren.

Die herzustellenden Formteile sind insbesondere für die Kraftfahrzeugindustrie, dort insbesondere für Kraftfahrzeuginnenräume geeignet.

Das erfindungsgemäße Verfahren bezieht sich insbesondere auf ein "One-Shot"-Verfahren. Hierbei wird ein mattenförmiges Halbzeug aus bindemittelhaltigen Faserwerkstoffen stark erhitzt und dann in einer Presse (und zwar vorzugsweise in einer so genannten "kalten Presse") mit einem Dekorwerkstoff (einer Kaschierung) verbunden und gleichzeitig umgeformt.

Bei üblichen One-Shot-Verfahren ist es nun problematisch, dass beispielsweise bei der Verwendung von Naturleder als Kaschierung eine genaue Positionierung der Nähte, welche für deren geraden Verlauf sehr wichtig ist, schwer möglich ist. Dies liegt vermutlich daran, dass das als Kaschierung dienende Leder teilweise ungewollt "nachfliesst" bzw. bereichsweise stärkeren Verformungen ausgesetzt ist als in anderen Bereichen. Dies führt sogar in der Folge dazu, dass das "One-Shot"-Verfahren für mehrteilige Kaschierungen bzw. Kaschierungen mit Ziernähten trotz seiner großen Vorteile in Bezug auf Umweltfreundlichkeit und Kostenersparnis als industriell nicht anwendbar gilt.

EP-A-348357 zeigt ein Verfahren nach dem Oberbegriff des Anspruch 1 und eine Vorrichtung nach dem Oberbegriff des Anspruchs 7.

Der Erfindung liegt daher die Aufgabe zugrunde, ein Formteil bzw. ein Verfahren zu dessen Herstellen bzw. ein entsprechendes Formwerkzeug zu schaffen, welches eine genaue Positionierung von Nähten oder dergleichen, selbst bei Herstellung im "One-Shot"-Verfahren sicherstellt.

Diese Aufgabe wird durch die Gegenstände der unabhängigen Ansprüche gelöst.

Dies ist zunächst ein Verfahren nach Anspruch 1.

Die Kaschierung wird mit Hilfe von "Voreilern" vor dem Ausform- bzw. Kaschiervorgang mit dem Halbzeug zumindest bereichsweise verbunden, um eine genaue Positionierung einer Naht oder dergleichen zu erreichen.

Diese "Voreiler" dienen also dazu, das Halbzeug (die erhitzte Matte) zunächst auf einen speziellen Bereich des Dekors (der Kaschierung) zu pressen, also beispielsweise den Bereich der Naht, um die Naht in diesem Bereich "festzuhalten". Erst nachfolgend wird das restliche Formwerkzeug geschlossen unter entsprechender Verformung des Halbzeuges bzw. der Kaschierung.

Die Herstellung erfolgt vorzugsweise mit einem erfindungsgemäßen Formwerkzeug. Dieses Formwerkzeug weist einen Grundaufbau nach Anspruch 7.

Die Voreiler sind vorzugsweise im Formwerkzeug eingebaute Schieber, welche getrennt von der ersten bzw. zweiten Werkzeughälfte und deren (Rest)-Konturen ausgefahren werden können, damit der erste Kontakt der Matte mit dem Nahtbereich des Dekors in jedem Falle in diesem Bereich erfolgt. Hierdurch kommt es zu einem Festhalten bzw. Anpressen der jeweiligen Bereiche bzw. Nahtverläufe der Kaschierung sowie des darunter liegenden Halbzeugs. Es wird gewährleistet, dass z.B. ein bestimmter Nahtverlauf entlang einer bestimmten Linie an der zweiten Werkzeughälfte (z.B. Oberwerkzeug) gerade verläuft, wie bei der unverformten Kaschierung der Fall ist. In diesem Zustand wird der Nahtverlauf mit dem Halbzeug angepresst, so dass hier keine Verformung mehr möglich ist, welche beispielsweise in einer "Schlangenlinie" resultieren könnte bzw. die Naht gegenüber beispielsweise einer Kante etc. verschieben würde. Beide Beispiele wären für das optische Erscheinungsbild sehr nachteilig, so dass diese, insbesondere bei hochwertigen Lederwerkstoffen, zu vermeiden sind. Nachdem der besonders sensible Bereich mit der Naht/dem Stoß bzw. anderen Merkmalen angepresst wurde, kann der Rest der beiden Konturen in Deckung gebracht werden. Selbst wenn es jetzt zu einem "Nachfließen" kommt, ist durch den angepressten Voreiler gesichert, dass dieses nicht im Bereich der Naht oder dergleichen geschieht, so dass dies optische weniger ins Gewicht fällt.

Vorteilhafte Weiterbildungen der vorliegenden Erfindung werden in den abhängigen Ansprüchen angegeben.

Eine vorteilhafte Weiterbildung sieht vor, dass die Kaschierung vorgeformt ist. Dies bedeutet, dass diese beispielsweise zweidimensional richtig zugeschnitten ist, um so übermäßigen Verschnitt zu vermeiden. Zusätzlich kann diese auch, zumindest bereichsweise, dreidimensional vorgeformt sein, um ein Reißen der Kaschierung durch zu starke Verformungsvorgänge zu vermeiden. Die Kaschierung ist vorteilhafterweise aus einem textilen Material, einer Folie, insbesondere Kunststofffolie oder Leder.

Die Kaschierung kann auch mehrteilig sein, wobei eine Naht einzelne Teile verbindet. Eine solche Verbindung ist beispielsweise bei Leder gegeben, da hier nicht beliebig große bzw. richtig zugeschnittene Teile vorliegen. Es ist allerdings auch möglich, lediglich eine Ziernaht vorzusehen, dies ist beispielsweise bei Kunststoffteilen der Fall. Selbstverständlich können die Teile auch direkt aneinander stoßen (mit ihren jeweiligen Stirnseiten) bzw. leicht überlappen. In diesem Fall ist die sichtbare obere Kante (welche dem späteren Fahrzeuginnenraum zugewandt ist) als "Nahtverlauf" zu verstehen.

Das Halbzeug ist vorzugsweise aus bindemittelhaltigen Faserwerkstoffen, also beispielsweise Naturfasern, wie z.B. Holzfaser, mit Polyolefinen als Bindemittel. Insbesondere kommen hier Fasermischungen von Naturfasern und Polypropylen-Fasern in Betracht. Anwendungsbereiche sind hier "Interior Systems", also z.B. Türinserts, Türverkleidungen, etc.

Auch das Halbzeug kann mattenförmig bzw. bahnförmig in das Werkzeug eingebracht werden oder bereits als fertiger Zuschnitt, um somit Verschnitt zu sparen. Das Halbzeug wird vorzugsweise vor der Verpressung auf 120°C bis 250°C, vorzugsweise 180°C bis 210°C vorgeheizt. Hierbei ist die Presse vorzugsweise selbst unbeheizt, so dass die gesamte Vorwärme des Halbzeugs dazu ausreicht, eine Anschmelzung an die Kaschierung zu erreichen. Die Erfindung soll hierauf jedoch nicht begrenzt werden, das Formwerkzeug selbst kann auch als zusätzliche Heizvorrichtung dienen.

Bei Ausformung des Formteils können die Kaschierung bzw. das Halbzeug (also das spätere Trägerteil) im selben Pressenhub mit Bauelementen versehen werden, beispielsweise Retainern, Clips oder dergleichen. Diese werden vorzugsweise rückseitig (am Trägerteil, also auf der der Kaschierung abgewandten Seite) in das Halbzeug gesteckt und später somit festgepresst oder auch adhäsiv befestigt.

Besonders vorteilhaft ist, mehrere Verteilersegmente vorzusehen, welche nacheinander in einer bestimmten Abfolgekaschierung und Halbzeug aufeinander pressen. Hierdurch wird eine Vergleichmäßigung des Flusses erreicht, es kommt nicht zu örtlichen Rissen, insgesamt zu einer gleichmäßigen Umformung. Vorzugsweise wird immer das erste Verteilerelement einen besonders kritisch zu positionierenden Naht- oder Stossbereich fixieren. Erst anschließend werden mit weiteren Verteilersegmenten bzw. weiteren Teilen der jeweiligen Konturen die anderen Abschnitte verpresst.

Im Folgenden werden noch mehrere vorteilhafte Weiterbildungen des Formwerkzeugs angegeben.

Hierbei weist vorzugsweise die erste Werkzeughälfte mindestens einen Konturabschnitt auf, der mit der ersten Werkzeughälfte unverschieblich verbunden ist (dieser Bereich entspricht also der Kontur im klassischen Sinne, welche unbeweglich ist). Es ist allerdings durchaus vorteilhaft, einen solchen Bereich vorzusehen, da dieser auch als Führung für die Voreiler dienen kann.

Vorzugsweise weisen Voreiler und/oder weitere Teile der ersten und/oder zweiten Kontur Befestigungselemente zum Fixieren einer Kaschierung und/oder des Halbzeugs auf. Hierdurch können bestimmte Nahtverläufe etc. in einer bestimmten Lage zu der jeweiligen Kontur gehalten werden, damit eine Verformung (beispielsweise schlangenlinienförmige Verformung) nicht ungewollt auftritt. Alternativ bzw. zusätzlich können solche Befestigungsmittel auch an der Kaschierung bzw. am Halbzeug vorgesehen werden.

Weiterhin kann die zweite Werkzeughälfte auch einen oberen Spannrahmen aufweisen. Der obere Spannrahmen kann zur zweiten Kontur (also der zweiten Werkzeughälfte) höhenverstellbar sein.

Die oben genannten Rahmen (unterer Spannrahmen, unterer Spannrahmen, mittlerer Spannrahmen) sind vorzugsweise so angeordnet, dass sie die erste bzw. zweite Kontur umgeben und somit vorzugsweise den gesamten Randbereich des Halbzeugs bzw. der Kaschierung spannen und verpressen können, um beispielsweise ungewollten Nachfluss von Kaschierung bzw. Halbzeug, was zu Faltenbildung führen würde, zu verhindern.

Weitere vorteilhafte Weiterbildungen werden in den übrigen Ansprüchen angegeben.

Die Erfindung wird nun anhand mehrerer Figuren erläutert. Es zeigen:
Fig. 1.1 eine Seitenansicht eines erfindungsgemäßen Formwerkzeugs im Ausgangszustand,
Fign. 1.2 und 1.3 zwei Querschnitte durch das Formwerkzeug nach Fig. 1.1,
Fign. 2.1 bis 6.3 weitere Ansichten und Schnitte des erfindungsgemäßen Formwerkzeugs während eines Presszyklus.

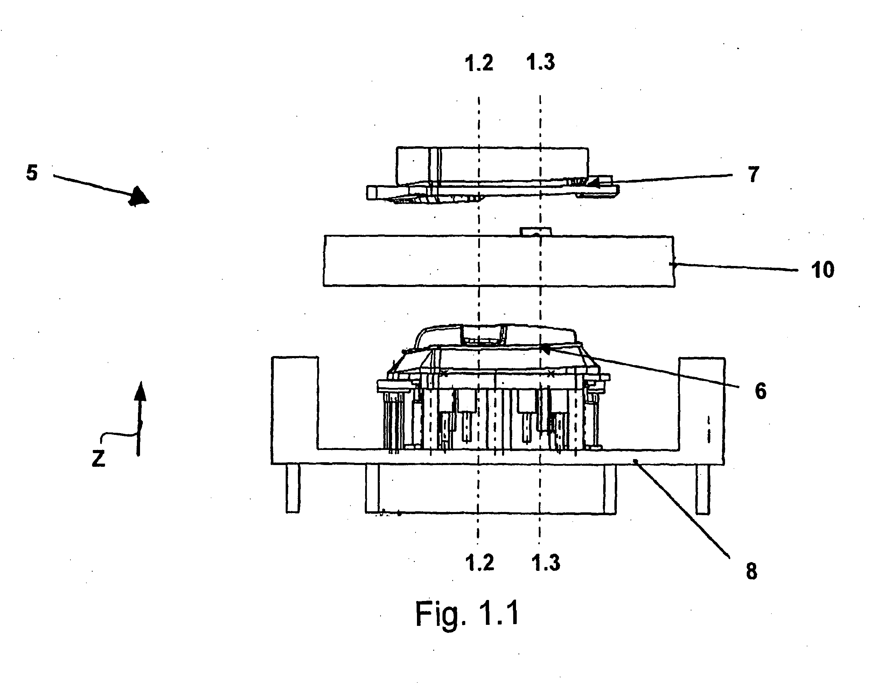

Fig. 1.1 zeigt eine seitliche Ansicht eines erfindungsgemäßen Formwerkzeugs.

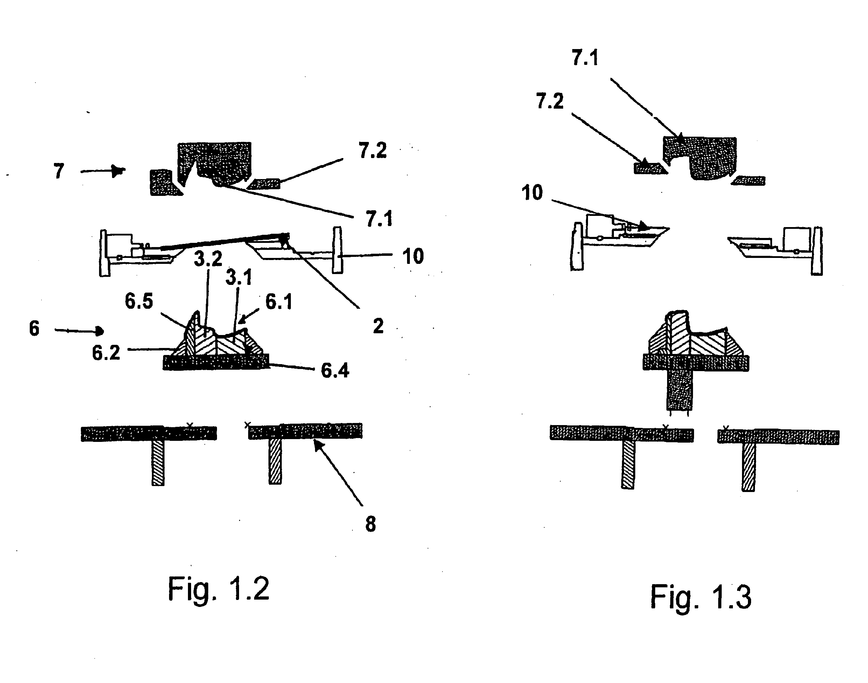

Fig. 1.2 zeigt einen Querschnitt der Linie 1.2-1.2 aus Fig. 1.1.
Fig. 1.3 zeigt einen weiteren Querschnitt, und zwar gemäß Schnittführung 1.3-1.3 aus Fig. 1.1.

Im Folgenden wird der Grundaufbau des Formwerkzeugs in Bezug auf Fign. 1.1 bis 1.3 erläutert.

Das Formwerkzeug hat einen Grundaufbau 8, auf welchem eine erste Werkzeughälfte 6 angeordnet ist. Diese erste Werkzeughälfte 6 ist hydraulisch höhenverschieblich bzgl. des Grundaufbaus 8. Die erste Werkzeughälfte hat eine Grundplatte 6.4, auf der ein unterer Spannrahmen 6.2 aufgebracht ist. Dieser ist gegenüber der Grundplatte 6.4 der ersten Werkzeughälfte höhenverschieblich. Außerdem gezeigt ist eine erste Kontur 6.1. Dieses ist dreiteilig aufgebaut. Hierbei ist ein erstes Voreilersegment 3.1 und ein zweites Voreilersegment 3.2 gegeben, welche jeweils einzeln unabhängig voneinander gegenüber der Grundplatte 6.4 höhenverstellbar sind. Links davon ist ein feststehendes Element 6.5 angebracht, welches ebenfalls zu der ersten Kontur gehört, allerdings mit der Grundplatte 6.4 fest verbunden ist. Diese erste Kontur 6.1 mit ihren drei Teilen sowie dem unteren Spannrahmen bilden insgesamt ein unteren Werkzeugnest.

Darüber gezeigt ist ein mittlerer Spannrahmen 10. Dieser ist ebenfalls gegenüber dem Grundaufbau 8 in der Höhe verschieblich. Die Unterseite dieses Spannrahmens ist hierbei bereichsweise zu der Oberseite des unteren Spannrahmens 6.2 komplementär ausgestaltet, um somit einen dazwischen angebrachten Randbereich eines Halbzeugs zu fixieren. Auf der Oberseite des mittleren Spannrahmens ist ein abgelegtes und positioniertes Dekor (Kaschierung) zu sehen.

Oberhalb ist eine zweite Werkzeughälfte 7 angeordnet, welche ebenfalls gegenüber dem Grundaufbau 8 höhenverstellbar ist. Dieser weist eine zweite Kontur 7.1 auf. Diese hat vorliegend keine Voreilersegmente, diese sind jedoch prinzipiell auch hierin möglich. Die zweite Werkzeughälfte 7 weist außerdem einen oberen Spannrahmen 7.2 auf. Dieser ist gegenüber der zweiten Kontur 7.1 (dem "oberen Werkzeugnest") auch in Höhenrichtung verstellbar, das Spaltmaß somit einstellbar zur Oberkontur des mittleren Spannrahmens, auf welchem die Kaschierung 2 aufgelegt ist.

Fig. 1.3 zeigt den Schnitt gemäß 1.3-1.3 aus Fig. 1.1. Während Fig. 1.2 einen Schnitt im Bereich der Griffmulde einer Kraftfahrzeugtürinnenverkleidung zeigt, zeigt Fig. 1.3 hier den Bereich einer Armauflage.

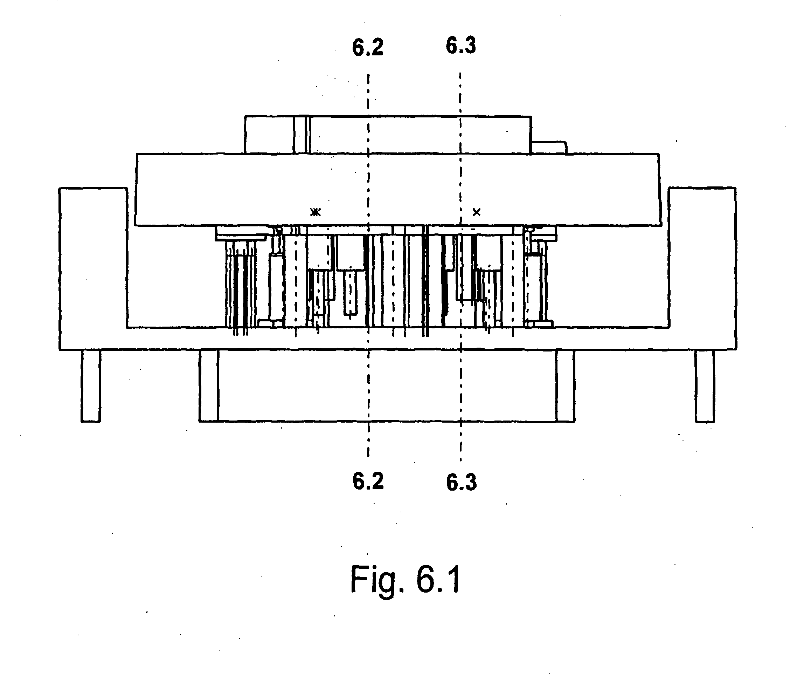

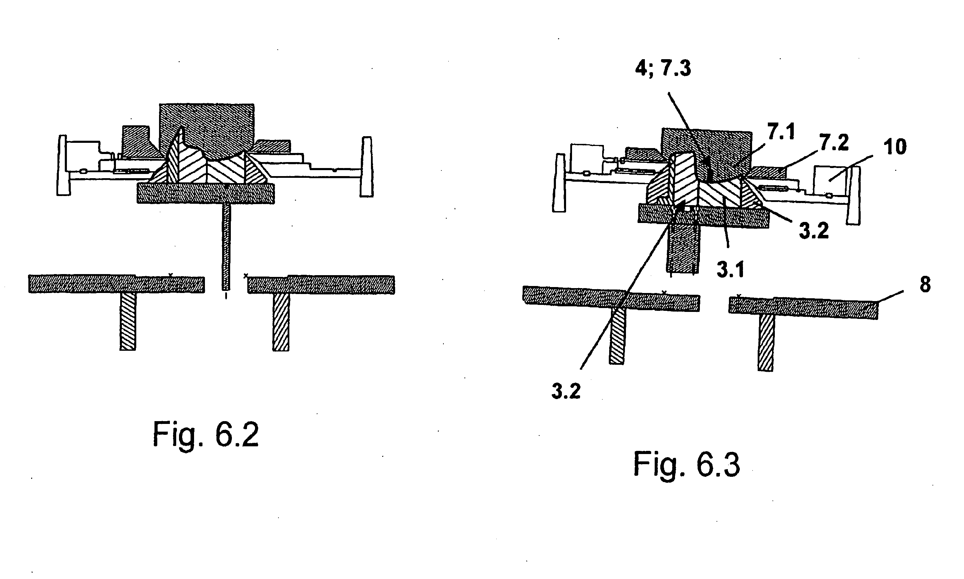

Gezeigt ist somit ein Formwerkzeug 5 zum Herstellen eines Formteils, wobei das Formwerkzeug einen Grundaufbau 8 sowie eine erste Werkzeughälfte 6 mit einer ersten Kontur 6.1 aufweist, wobei die erste Werkzeughälfte 6 gegenüber dem Grundaufbau 8 höhenverstellbar ist. Die erste Werkzeughälfte 6 weist außerdem einen unteren Spannrahmen 6.2 auf. Das Formwerkzeug enthält außerdem eine zweite Werkzeughälfte 7 mit einer zweiten Kontur 7.1, wobei und zweite Werkzeughälfte in einem Endpresszustand (siehe Fig. 6.1) im Wesentlichen zueinander komplementäre Formen aufweisen. Die erste Werkzeughälfte 6 weist im Bereich der ersten Kontur 6.1 mindestens einen Voreiler (3.1 bzw. 3.2) auf, welcher gegenüber der übrigen ersten Werkzeughälfte 6 höhenverschieblich ist.

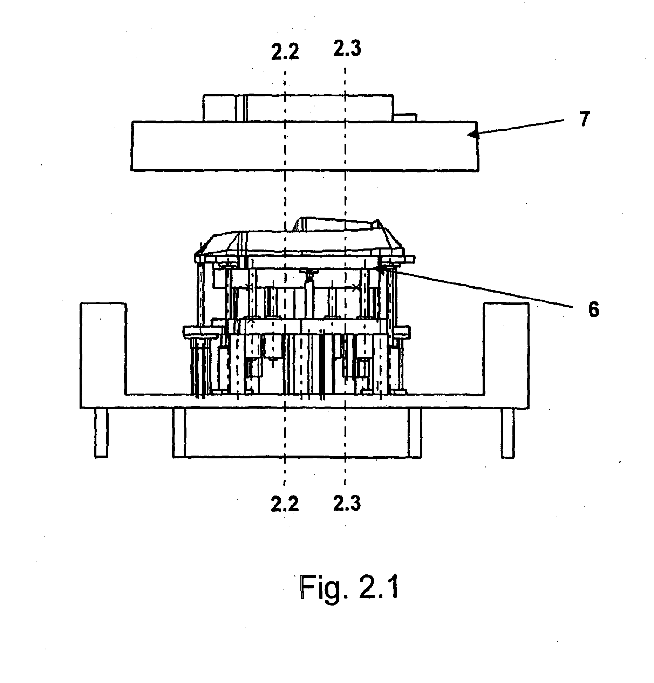

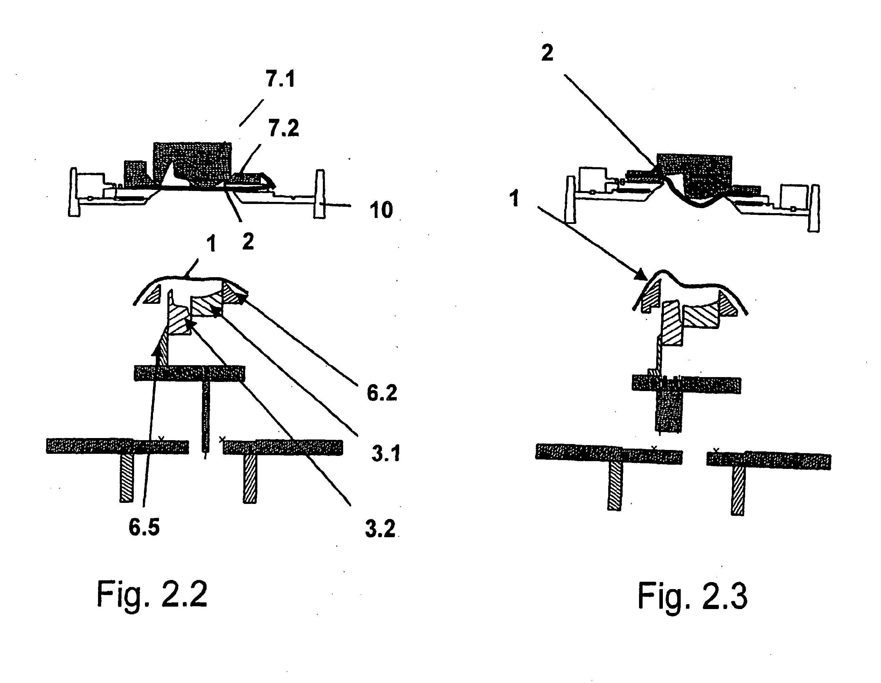

Fign. 2.1 bis 2.3 zeigen entsprechende Schnitte bzw. Ansichten, wobei der mittlere Spannrahmen 10 in einer oberen Stellung angeordnet ist. Die Kaschierung 2 wird zwischen der Oberseite des mittleren Spannrahmens 10 sowie der Unterseite des oberen Spannrahmens 7.2 gepresst. Hierbei wird die Kaschierung zwischen den Spannrahmenhälften positioniert und faltenfrei gehalten bzw. durchgedrückt (siehe insbesondere Fig. 2.3).

Der untere Spannrahmen 6.2 ist auf maximaler Höhe gegenüber der Platte 6.4. Der untere Spannrahmen 6.2 steht somit über dem höchsten Konturpunkt der unteren (ersten) Kontur 6.1.

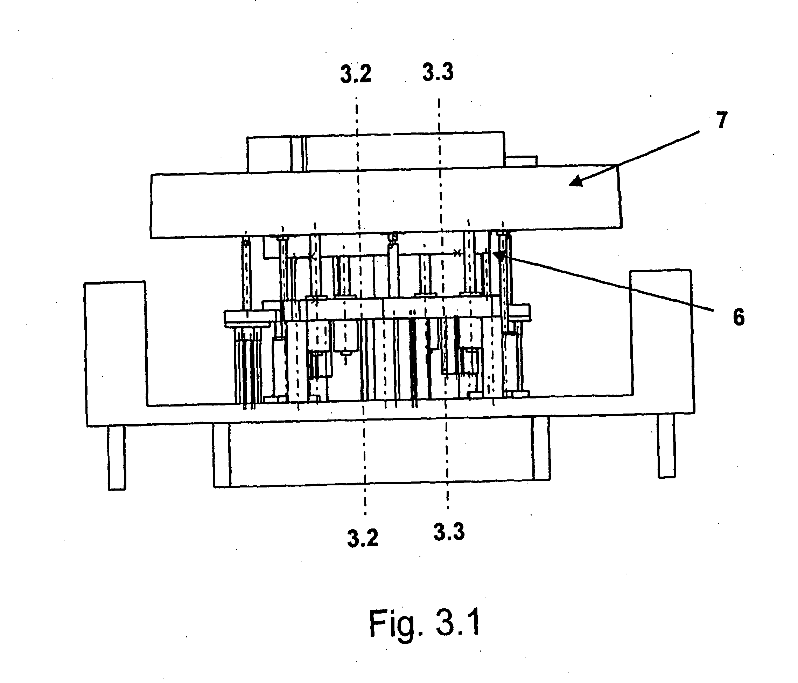

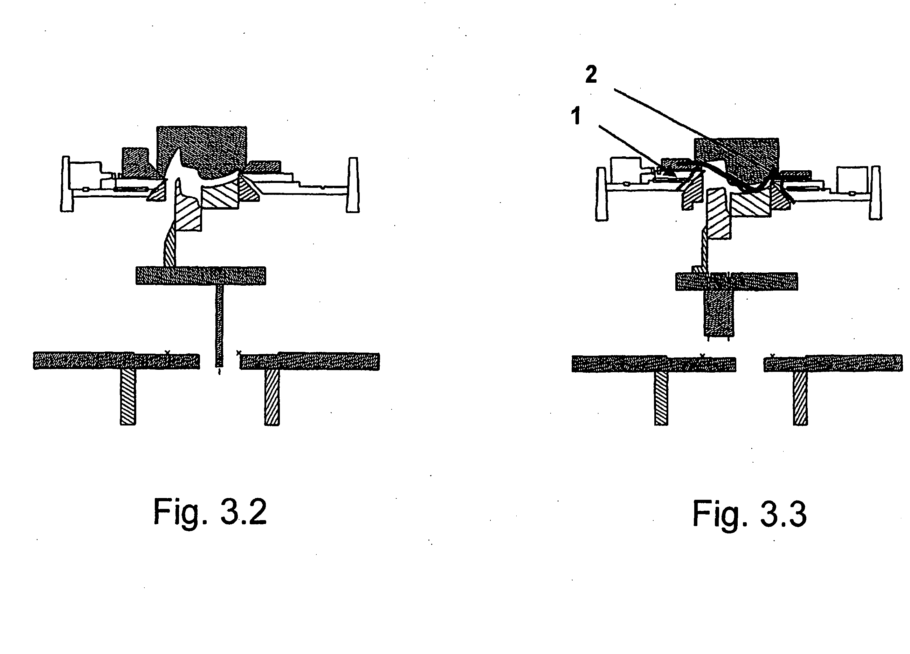

In Fign. 3.1 bis 3.3 ist der untere Spannrahmen bzw. auch die Grundplatte 6.4 deutlich nach oben gerückt, so dass der mittlere Spannrahmen 10 mit der Kontur des unteren Spannrahmens 6.2 fast kontaktiert. Aus Gründen der Übersichtlichkeit ist lediglich in Fig. 3.3 die Kaschierung 2 sowie das Halbzeug 1 gezeigt.

Wie in Fig. 3.3 zu sehen ist, wird der untere Spannrahmen vom mittleren kontaktiert und "überdrückt". Halbzeugmaterial bzw. Kaschierungsmaterial fließen unabhängig voneinander nach, die Spannrahmen sind noch nicht so fest gepresst, dass ein Nachfließen verhindert wird.

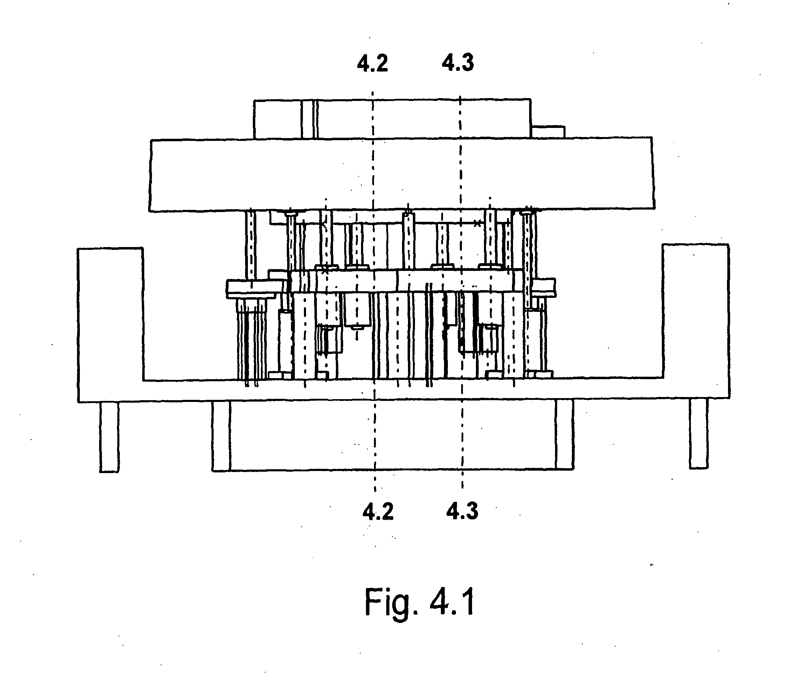

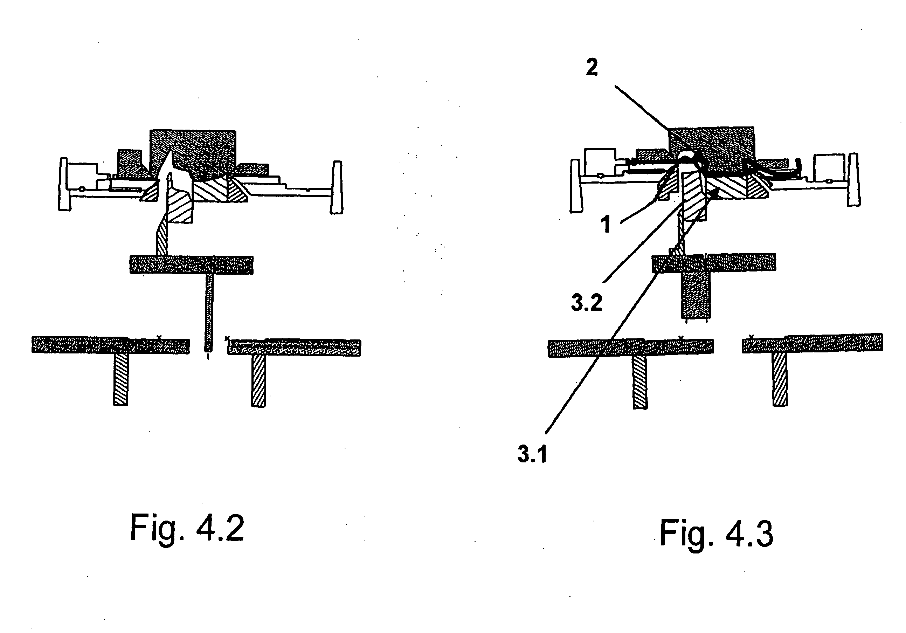

Fign. 4.1 bis 4.3 zeigen den Eingriff des ersten Voreilersegments 3.1, welches gegen einen komplementären Bereich der zweiten Werkzeughälfte 7 und der dortigen Kontur presst. Die Umformung/Laminierung zwischen der Kaschierung und dem Halbzeug ist in diesem Konturbereich abgeschlossen, es fließt kein Material mehr von außen nach. Der Ziernahtbereich ist dekorseitig (also zum späteren Fahrzeuginnenraum hin) auf dem teilausgeformten Bauteil fixiert. Somit ist ein Nachfließen, welches die Ziernaht verändern könnte (beispielsweise eine "S"-Form statt einer geraden Linie), ausgeschlossen. Alternativ zu einer Ziernaht kann auch eine Verbindungsnaht einzelner Teile gegeben sein (insbesondere bei Leder). Es können allerdings auch aneinander grenzende Bereiche oder überlappende Bereiche zweier Kaschierungsteile gegeben sein.

Die in Fig. 4.3 verbunden gezeigten Elemente Kaschierung 2 und Halbzeug 1 sind jeweils vorher zugeschnitten worden, um den Verschnitt zu minimieren.

Die Kaschierung besteht aus einem textilen Material, und/oder einem folienartigen Material, insbesondere Kunststofffolie und/oder Leder.

Das Halbzeug besteht aus einem Holzfaserformstoff mit einem thermoplastischen Bindematerial (Polypropylen).

Das Halbzeug wurde vor der Verpressung auf 200°C vorgeheizt. Diese Restwärme reicht aus, damit eine vollständige Anschmelzung bei der Verpressung des Halbzeugs an die Kaschierung erfolgt.

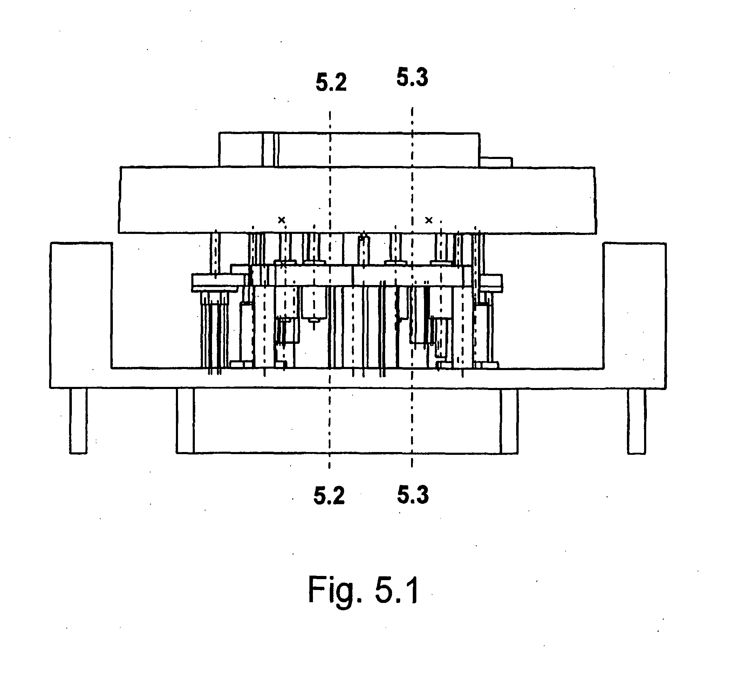

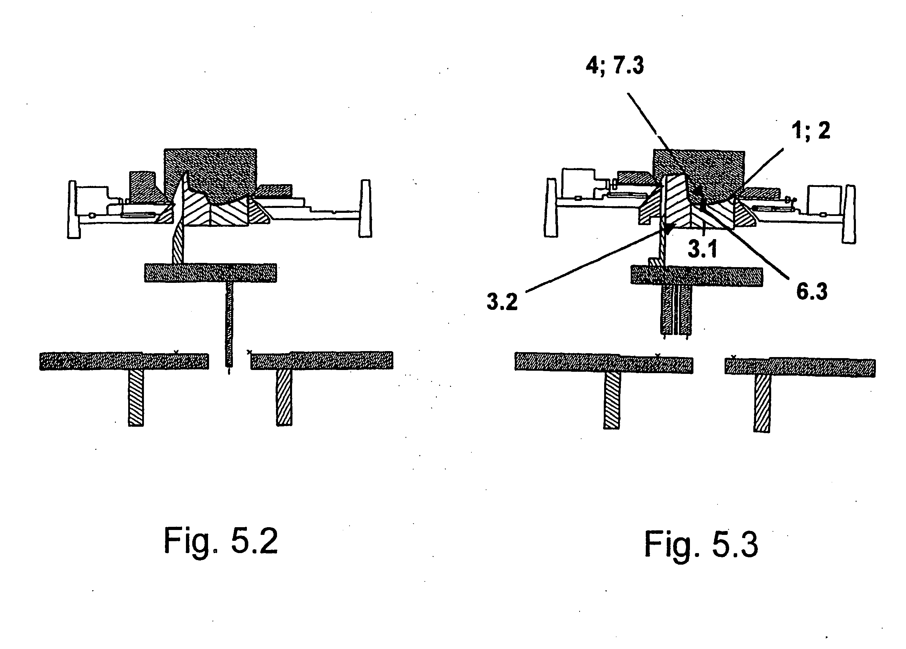

Fign. 5.1 bis 5.3 zeigen den Zustand, bei dem zusätzlich das zweite Verteilersegment 3.2 Kaschierung und Halbzeug miteinander verpresst. Die Umformung/Laminierung ist in diesem Konturbereich ebenfalls abgeschlossen, es fließt kein Material (aus Richtung der Verteilsegments 3.1, also aus der Richtung der Ziernahtlage) mehr nach.

Gemäß Fig. 5.3 kann außerdem vorgesehen sein, dass Voreiler und/oder weitere Teile der ersten und/oder zweiten Kontur Befestigungselemente 6.3 bzw. 7.3 zum Fixierung einer Kaschierung 2 und/oder des Halbzeugs 1 aufweisen. Hiermit wird ein zusätzlicher Schutz gegen unbeabsichtigtes Fließen bzw. Verziehen gewährleistet, so dass die Nähte an ihrem vorbestimmten Platz bleiben. Dies ist allerdings nur eine fakultative Maßnahme und nicht in jeder Ausführungsform notwendig.

Fign. 6.1 bis 6.3 zeigen den Endzustand. Hierbei ist die erste Kontur soweit geschlossen, auch im Bereich des feststehenden Elements 6.5 besteht Laminierung und Verpressung. Die Umformung/Laminierung ist abgeschlossen, die Kühl- und Haltezeit beginnt (je nach Bauteilkontur und Auslegung der Werkzeugkühlung und Materialdicke 15-120 Sekunden, vorzugsweise 20-30 Sekunden). Eventuelle zusätzliche Prozessschritte können erfolgen, der überstehende Rand wird abgetrennt. Nach Ablauf dieses Schrittes öffnet das Werkzeug und bewegt sich wieder in die Grundstellung nach Fig. 1.1. Das fertige Formteil bzw. der Randschnitt (Abfall) werden entnommen.

Gezeigt ist hier also ein Verfahren zum Herstellen eines kaschierten Formteils, vorzugsweise eines Formteils zur Innenverkleidung eines Kraftfahrzeugs. Dieses besteht aus einem formstabilen Trägerteil und einer mit diesem verbunden sichtseitigen Kaschierung aus Folie, Gewebe oder ähnlichen dekorativen Kaschierungswerstoffen wie z.B. Leder. Es wird erwärmter Zustand eines matten- oder plattenförmigen Halbzeugs 1 aus bindemittelhaltigen Faserstoffen in einem Formwerkzeug zum Formteil ausgeformt und dabei gleichzeitig mit der Kaschierung 2 verbunden. Die Kaschierung wird mit Hilfe von Voreilern (3.1; 3.2) vor dem Ausform- bzw. Kaschiervorgang mit dem Halbzeug bereichsweise verbunden. Mit "Ausform-" bzw. "Kaschiervorgang" ist hiermit das endgültige Ausformen und Kaschieren sowie Abkühlen gemeint. Dadurch, dass in dem Bereich der Voreiler eine Positionierung beispielsweise von Nähten oder Stößen erfolgt, wird ein "Nachfließen" in andere Bereiche verhindert, welche beispielsweise zu einer Verformung dieser Naht führen könnten.

Außerdem wird mit dem Vorsehen mehrerer Voreiler, welche in vorbestimmtem Abstand zeitlich bewegt werden, erreicht, dass es nicht zu einem "Reißen" des Halbzeugs kommt.

Insbesondere in Bezug auf die sehr sensible Behandlung von Nähten bzw. anderen Übergängen, die für das ästhetische Erscheinungsbild des späteren Formteils wichtig sind, unterscheidet sich die vorliegende Erfindung eklatant vom Stand der Technik.

Im Folgenden wird nochmals auf einige Aspekte des Formwerkzeugs bzw. des durchzuführenden Verfahrens zur Herstellung des erfindungsgemäßen Formteils eingegangen. Der Umformprozess des Formwerkzeugs findet durch Verschiebung der ersten Werkzeughälfte, der zweiten Werkzeughälfte bzw. der Spannrahmen in Z-Richtung statt (siehe Fig. 1.1).

Hierbei steht im Vordergrund, dass zunächst einmal die empfindlichen Ziernähte bzw. Übergänge bzw. Nähte etc. durch Voreiler entsprechend fixiert werden, um eine Verformung (beispielsweise Schlangenlinienbildung der Nähte) zu verhindern. Außerdem soll durch die Anzahl der Voreiler (unter Umständen mehrere Voreiler pro Werkzeughälfte) ein der Fließgrenze des jeweiligen Materials angepasstes Verformen gewährleistet werden.

Hierzu tragen auch die entsprechenden Spannrahmen entscheidend bei, die nicht zwingend eben sind, um das Halbzeug bzw. die Kaschierung eben vorzuspannen, sondern die auch zumindest in Z-Richtung Variationen aufweisen.

Hierbei ist vorteilhaft, dass die zweite Werkzeughälfte 7 einen oberen Spannrahmen 7.2 aufweist. Dieser ist vorzugsweise zur zweiten Kontur 7.1 der zweiten Werkzeughälfte höhenverstellbar. Auf diese Weise kann eine Kaschierung, welche in einem unebenen Zustand vorgespannt ist und somit in ihrer Randkontur bereits dem Formteil weitgehend angepasst ist, gegen diese zweite Kontur verfahren werden, um hier nochmals stärker uneben vorgespannt zu werden.

Dasselbe ist mit dem unteren Spannrahmen möglich, der zur ersten Kontur der ersten Werkzeughälfte höhenverstellbar ist.

Hierbei ist vorteilhaft, dass die Randkontur des oberen Spannrahmens zumindest in Höhenrichtung (Z-Richtung) variieren kann. Ebenso kann die Randkontur des unteren Spannrahmens 6.2 zumindest in Höhenrichtung variieren. Hierdurch können sowohl die Kaschierung als auch das vorgewärmte Halbzeug unabhängig voneinander uneben vorgespannt werden, so dass diese Teile gut vorgeformt in ihre Endform gebracht werden und hierbei gleichzeitig die Verbindung zwischen Kaschierung und Halbzeug stattfindet.

Durch dieses gezielte Vorformen (unter Umständen unter Einsatz mehrerer Voreiler, nicht nur eines Voreilers pro Werkzeughälfte) findet eine behutsame Vorformung statt. Außerdem wird durch das Klemmen bzw. die Fixierung von Kaschierung und/oder Halbzeug erreicht, dass ein definierter Materialnachschub beim weiteren Verformen gegeben ist, d.h. nicht unnötig viel Material nachfließt, was zu einer Faltenbildung führen könnte.

Vorteilhaft ist also, dass die Kaschierung 2 bzw. das Halbzeug 1 flächig vorspannbar sind (dies sogar uneben flächig vorspannbar) und im vorgespannten Zustand zu Teilen einer formgebenden Werkzeughälfte des Formwerkzeugs verfahrbar sind. Wichtig ist bei diesem Vorspannen die Anpassung an die Randtopografie des späteren Formteils.

Besonders vorteilhaft beim vorliegenden Formwerkzeug ist der mittlere Spannrahmen 10, der der Gesamtstruktur hohe Stabilität verleiht. Die Kaschierung 2 ist vorzugsweise zwischen der Oberseite des mittleren Spannrahmens 10 und der Unterseite des oberen Spannrahmens 7.2 fixierbar. In diesen Berührbereichen sind oberer Spannrahmen 7.2 sowie mittlerer Spannrahmen 10 aufeinander angepasst, so dass hier auch unebene Topografien (vor allem Änderungen in Z-Richtung) darstellbar sind und die Kaschierung entsprechend fixiert bzw. geklemmt werden kann.

Dasselbe trifft für den unteren Spannrahmen zu im Verhältnis zu dem mittleren Spannrahmen 10. Hier kann beispielsweise das Halbzeug zwischen diesen beiden Teilen, gegebenenfalls auch uneben, geklemmt werden, um hier eine auch schon in der Höhe (Z-Richtung) angepasste "Vorverformung" zu gewährleisten und unbeabsichtigtes Nachfließen von Material (was zur Faltenbildung führen könnte) zu vermeiden.

## Patentansprüche

1. Verfahren zum Herstellen eines kaschierten Formteils, vorzugsweise eines Formteils zur Innenverkleidung eines Fahrzeuges, bestehend aus einem formstabilen Trägerteil und einer mit diesem verbundenen sichtseitigen Kaschierung aus Folie, Geweben oder ähnlichen dekorativen Kaschierungswerkstoffen, bei dem ein erwärmter Zuschnitt eines matten- oder plattenförmigen Halbzeuges (1) aus bindemittelhaltigen Faserwerkstoffen in einem Formwerkzeug zum Formteil ausgeformt und dabei gleichzeitig mit der Kaschierung (2) verbunden wird ("One-Shot"-Verfahren), welche die Kaschierung mit Hilfe von "Voreilern" (3.1; 3.2) vor dem Ausform- bzw. Kaschiervorgang mit dem Halbzeug (1) bereichsweise verbunden wird, um eine genaue Positionierung einer Naht (4) oder dergleichen zu erreichen **dadurch gekennzeichnet, daß** die Kaschierung (2) flächig vorspannbar ist und im vorgespannten Zustand zu Teilen einer formgebenden Werkzeughälfte des Formwerkzeugs verfahrbar ist und dass das Halbzeug (1) flächig vorspannbar ist und im vorgespannten Zustand zu Teilen einer formgebenden Werkzeughälfte des Formwerkzeugs verfahrbar ist.

2. Verfahren nach Anspruch 1, **dadurch gekennzeichnet, dass** die Kaschierung (2) aus textilem Material, aus folienartigem Material oder aus Leder ist.

3. Verfahren nach einem der vorhergehenden Ansprüche, **dadurch gekennzeichnet, dass** das Halbzeug (1) aus Naturfaser-PP ist.

4. Verfahren nach einem der vorhergehenden Ansprüche, **dadurch gekennzeichnet, dass** bei Ausformung des Trägerteils und der Kaschierung im gleichen Pressenhub am Trägerteil rückseitig Bauelemente, wie Retainer, Clips oder dergleichen angebracht oder adhäsiv befestigt werden.

5. Verfahren nach einem der vorhergehenden Ansprüche, **dadurch gekennzeichnet, dass** einzelne Voreilersegmente (3.1; 3.2) nacheinander vorbestimmte Bereiche der Kaschierung (2) und des Halbzeugs (1) aneinander pressen.

6. Verfahren nach Anspruch 5, **dadurch gekennzeichnet, dass** ein Naht- oder Stoßbereich zuerst mithilfe eines bestimmten Voreilersegments (3.1) fixiert wird und erst anschließend weitere Voreilersegmente (3.2) bzw. weitere Konturbereiche eingreifen.

7. Formwerkzeug (5) zum Herstellen eines Formteils nach Anspruch 1, **dadurch gekennzeichnet, dass** dieses Formwerkzeug einen Grundaufbau (9) sowie eine erste Werkzeughälfte (6) mit einer ersten Kontur (6.1), wobei die erste Werkzeughälfte 86) gegenüber dem Grundaufbau (8) höhenverstellbar und die erste Werkzeughälfte (6) einen unteren Spannrahmen (6.2) aufweist, sowie eine zweite Werkzeughälfte (7) mit zweiter Kontur (7.1) aufweist, wobei erste (6) und zweite (7) Werkzeughälfte in einem Endpresszustand im Wesentlichen zueinander komplementäre Formen aufweisen und die erste Werkzeughälfte (6) im Bereich der ersten Kontur (6.1) mindestens einen Voreiler (3.1; 3.2) aufweist, welcher gegenüber der übrigen ersten Werkzeughälfte (6) höhenverschieblich ist, **dadurch gekennzeichnet, dass** ein mittlerer Spannrahmen (10) vorgesehen ist zum Klemmen des Halbzeugs (1) zwischen (6.2) unterem und mittleren Spannrahmen (10) und die Kaschierung (2) zwischen dem oberen (7.2) und dem mittleren (10) Spannrahmen fixierbar ist.

8. Formwerkzeug nach Anspruch 7, **dadurch gekennzeichnet, dass** dieses mehrere Voreiler (5.1; 5.2) aufweist, welche unabhängig voneinander gegenüber der ersten Werkzeughälfte (6) höhenverstellbar sind.

9. Formwerkzeug nach einen der Ansprüche 7 oder 8 **dadurch gekennzeichnet, dass** die erste Werkzeughälfte (6) mindestens einen Konturabschnitt aufweist, der mit der ersten Werkzeughälfte unverschieblich verbunden ist.

10. Formwerkzeug nach einem der Ansprüche 7 bis 9, **dadurch gekennzeichnet, dass** Voreiler (3.1; 3.2) und/oder weitere Teile der ersten (6.1) und/oder zweiten (7.1) Kontur Befestigungselemente (6.3; 7.3) zum Fixieren einer Kaschierung (2) und/oder des Halbzeugs (1) aufweisen.

11. Formwerkzeug nach einem der Ansprüche 7 bis 10, **dadurch gekennzeichnet, dass** die zweite Werkzeughälfte (7) einen oberen Spannrahmen (7.2) aufweist.

12. Formwerkzeug nach Anspruch 11, **dadurch gekennzeichnet, dass** der obere Spannrahmen (7.2) zur zweiten Kontur (7.1) der zweiten Werkzeughälfte (7) höhenverstellbar ist.

13. Formwerkzeug nach einem der Ansprüche 7 bis 12, **dadurch gekennzeichnet, dass** der untere Spannrahmen (6.2) zur ersten Kontur (6.1) der ersten Werkzeughälfte (6) höhenverstellbar ist.

## Claims

1. Method for manufacturing a laminated moulded part, preferably a moulded part for the interior trim of a vehicle, consisting of a shape-stable carrier part and a viewed-side lamination made of a film, fabrics or similar decorative lamination materials, which is connected to this carrier part, in which method a heated blank of a mat-like or plate-like semi-finished product (1) made of fibre materials containing binding agent is moulded in a moulding tool into the moulded part and in the process simultaneously connected to the lamination (2) (one-shot method), which lamination is regionally connected using "leaders" (3.1; 3.2) to the semi-finished product (1) before the moulding and laminating procedure, in order to achieve an exact positioning of a seam (4) or the like, **characterised in that** the lamination (2) is areally preloadable, and in the preloaded condition is movable to parts of a shaping tool half of the moulding tool, and **in that** the semi-finished product (1) is areally preloadable, and in the preloaded condition is movable to parts of a shaping tool half of the moulding tool.

2. Method according to Claim 1, **characterised in that** the lamination (2) is made of textile material, of film-like material or of leather.

3. Method according to one of the preceding claims, **characterised in that** the semi-finished product (1) is made of natural fibre PP.

4. Method according to one of the preceding claims, **characterised in that,** on moulding the carrier part and the lamination in the same press stroke, components, such as retainers, clips or the like, are attached or adhesively fastened to the rear side of the carrier part.

5. Method according to one of the preceding claims, **characterised in that** individual leader segments (3.1; 3.2) successively press predetermined regions of the lamination (2) and of the semi-finished product (1) against one another.

6. Method according to Claim 5, **characterised in that** a seam region or abutment region is firstly fixed using a particular leader segment (3.1) and only subsequently further leader segments (3.2) or further contour regions intervene.

7. Moulding tool (5) for manufacturing a moulded part according to Claim 1, **characterised in that** this moulding tool comprises a base structure (9), a first tool half (6) with a first contour (6.1), the first tool half (6) being height-adjustable with respect to the base structure (8) and the first tool half (6) comprising a lower clamping frame (6.2), and also a second tool half (7) with a second contour (7.1), the first (6) and second (7) tool half having shapes which are substantially complementary to one another in a final pressing condition, and the first tool half (6), in the region of the first contour (6.1), comprising at least one leader (3.1; 3.2) which is height-displaceable with respect to the remaining first tool half (6), **characterised in that** a middle clamping frame (10) is provided, for clamping the semi-finished product (1) between (6.2) lower and middle clamping frame (10) and the lamination (2) is fixable between the upper (7.2) and the middle (10) clamping frame.

8. Moulding tool according to Claim 7, **characterised in that** this moulding tool comprises a plurality of leaders (5.1; 5.2) which are height-adjustable with respect to the first tool half (6), independently of one another.

9. Moulding tool according to one of Claims 7 or 8, **characterised in that** the first tool half (6) comprises at least one contour section which is undisplaceably connected to the first tool half.

10. Moulding tool according to one of Claims 7 to 9, **characterised in that** leaders (3.1; 3.2) and/or further parts of the first (6.1) and/or second (7.1) contour comprise fastening elements (6.3; 7.3) for fixing a lamination (2) and/or the semi-finished product (1).

11. Moulding tool according to one of Claims 7 to 10, **characterised in that** the second tool half (7) comprises an upper clamping frame (7.2).

12. Moulding tool according to Claim 11, **characterised in that** the upper clamping frame (7.2) is height-adjustable with respect to the second contour (7.1) of the second tool half (7).

13. Moulding tool according to one of Claims 7 to 12, **characterised in that** the lower clamping frame (6.2) is height-adjustable with respect to the first contour (6.1) of the first tool half (6).

## Revendications

1. Procédé de fabrication d'une pièce façonnée doublée, de préférence une pièce façonnée pour l'habillage intérieur d'un véhicule automobile, constituée d'une partie de support de forme stable et d'un doublage côté visuel relié à celle-ci en film, en tissu ou en d'autres matériaux de doublage décoratifs similaires, dans lequel une section chauffée d'un demi-produit (1) en forme de mat ou de plaque formé de matériaux fibreux contenant un liant est moulée en pièce façonnée dans un outil de façonnage et est reliée simultanément au doublage (2) (procédé en une seule opération), lequel doublage est relié par zones à l'aide de "dispositifs d'avancement" (3.1 ; 3.2) avant l'opération de moulage ou de doublage pour atteindre un positionnement précis d'un joint (4) ou analogue, **caractérisé en ce que** le doublage (2) peut être précontraint à plat et déplacé à l'état précontraint sur des parties d'un demi-outil de façonnage de l'outil de façonnage et **en ce que** le demi-produit (1) peut être précontraint à plat et déplacé à l'état précontraint sur des parties d'un demi-outil de façonnage de l'outil de façonnage.

2. Procédé selon la revendication 1, **caractérisé en ce que** le doublage (2) est formé d'un matériau textile, d'un matériau pelliculaire ou de cuir.

3. Procédé selon l'une quelconque des revendications précédentes, **caractérisé en ce que** le demi-produit (1) est formé de fibres naturelles PP.

4. Procédé selon l'une quelconque des revendications précédentes, **caractérisé en ce que,** lors du moulage de la partie de support et du doublage dans la même course de la presse, des éléments de construction, tels que des éléments de retenue, des pinces ou analogues, sont appliqués ou fixés par collage à l'arrière sur la partie de support.

5. Procédé selon l'une quelconque des revendications précédentes, **caractérisé en ce que** des segments d'avancement individuels (3.1 ; 3.2) pressent successivement des zones prédéterminées du doublage (2) et du demi-produit (1) l'une sur l'autre.

6. Procédé selon la revendication 5, **caractérisé en ce qu'**une zone de jonction ou d'assemblage est d'abord fixée au moyen d'un segment d'avancement déterminé (3.1) et ce n'est qu'ensuite que d'autres segments d'avancement (3.2) ou d'autres zones de contour s'enclenchent.

7. Outil de façonnage (5) pour la fabrication d'une pièce façonnée selon la revendication 1, **caractérisé en ce que** cet outil de façonnage présente une structure de base (9) ainsi qu'un premier demi-outil (6) avec un premier contour (6.1), dans lequel le premier demi-outil (6) peut être déplacé en hauteur par rapport à la structure de base (8) et le premier demi-outil (6) présente un cadre de serrage inférieur (6.2), ainsi qu'un second demi-outil (7) avec un second contour (7.1), dans lequel les premier (6) et second (7) demi-outils présentent des formes sensiblement complémentaires dans la position finale de la presse et le premier demi-outil (6) présente dans la zone du premier contour (6.1) au moins un dispositif d'avancement (3.1 ; 3.2), qui est déplaçable en hauteur par rapport au reste du premier demi-outil (6), **caractérisé en ce qu'**un cadre de serrage central (10) est prévu pour fixer le demi-produit (1) entre (6.2) le cadre de serrage inférieur et le cadre de serrage central (10) et le doublage (2) peut être fixé entre le cadre de serrage supérieur (7.2) et le cadre de serrage central (10).

8. Outil de façonnage selon la revendication 7, **caractérisé en ce que** celui-ci présente plusieurs dispositifs d'avancement (5.1 ; 5.2), qui peuvent se déplacer en hauteur par rapport au premier demi-outil (6), indépendamment l'un de l'autre.

9. Outil de façonnage selon l'une quelconque des revendications 7 ou 8, **caractérisé en ce que** le premier demi-outil (6) présente au moins une section de contour qui est reliée au premier demi-outil sans pouvoir se déplacer.

10. Outil de façonnage selon l'une quelconque des revendications 7 à 9, **caractérisé en ce que** les dispositifs d'avancement (3.1 ; 3.2) et/ou d'autres parties du premier (6.1) et/ou du second (7.1) contour présentent des éléments de fixation (6.3 ; 7.3) pour fixer un doublage (2) et/ou le demi-produit (1).

11. Outil de façonnage selon l'une quelconque des revendications 7 à 10, **caractérisé en ce que** le second demi-outil (7) présente un cadre de serrage supérieur (7.2).

12. Outil de façonnage selon la revendication 11, **caractérisé en ce que** le cadre de serrage supérieur (7.2) peut être déplacé en hauteur par rapport au second contour (7.1) du second demi-outil (7) peut être déplacé en hauteur.

13. Outil de façonnage selon l'une quelconque des revendications 7 à 12, **caractérisé en ce que** le cadre de serrage inférieur (6.2) peut être déplacé en hauteur par rapport au premier contour (6.1) du premier demi-outil (6).
